(19) **Europäisches Patentamt / European Patent Office / Office européen des brevets**

(11) **EP 2 053 077 A1**

(12) # EUROPEAN PATENT APPLICATION

(43) Date of publication:
**29.04.2009 Bulletin 2009/18**

(51) Int Cl.:
*C08J 5/18* (2006.01)     *C08L 23/08* (2006.01)
*B29C 49/00* (2006.01)

(21) Application number: **09000974.7**

(22) Date of filing: **21.10.2005**

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.10.2004 GB 0423555**

(62) Document number(s) of the earlier application(s) in accordance with Art. 76 EPC:
**05797913.0 / 1 814 941**

(71) Applicant: **Borealis Technology OY**
**06101 Porvoo (FI)**

(72) Inventors:
- **Follestad, Arild**
  **3960 Stathelle (NO)**
- **Palmlöf, Magnus**
  **3960 Stathelle (NO)**
- **Nord-Varhaug, Katrin**
  **3960 Stathelle (NO)**

- **Helland, Irene**
  **3960 Stathelle (NO)**
- **Skar, Merete**
  **3960 Stathelle (NO)**
- **Eggen, Svein**
  **3960 Stathelle (NO)**
- **Johansen, Arno**
  **3960 Stathelle (NO)**
- **Nilsen, Jorunn**
  **3960 Stathelle (NO)**

(74) Representative: **Campbell, Neil Boyd**
**Frank B. Dehn & Co.**
**St Bride's House**
**10 Salisbury Square**
**London**
**EC4Y 8JD (GB)**

Remarks:
This application was filed on 23-01-2009 as a divisional application to the application mentioned under INID code 62.

(54) **Process**

(57) A process for the manufacture of a polymer film comprising:

obtaining a polymer composition comprising at least 70% wt of a chromium HDPE and 3 to 30% wt of a unimodal mLLDPE;

extruding and then blowing said film at blow up ratio of 2:1 to 4:1

so as to obtain a film having a tensile strain at break in the transverse direction of at least 550%.

**EP 2 053 077 A1**

**Description**

This invention relates to a polyethylene composition, preferably high density polyethylene composition and to articles, such as moulded articles, and films made therefrom which exhibit desirable mechanical properties such as high charpy impact strength or tensile strain at break as well as desired processability. In one of its preferred embodiments, the invention concerns a composition comprising a unimodal single site polyethylene component mixed with a Ziegler-Natta multimodal polyethylene component.

Polyethylene is widely used in the manufacture of moulded articles, such as injection moulded articles (e.g. containers and bottles) and in different film applications, e.g. extrusion coating and film blowing, due to its favourable physical and chemical properties.

In order to be suitable for applications in all these fields, the polyethylene needs to possess certain mechanical and processing properties. It will be obvious therefore that in many moulding applications, good mechanical strength is needed (e.g. good impact resistance) and the polyethylene needs to be suitable for use with the material which the article is intended to carry. For films, it is important that migration of polymer into a product being packaged does not occur and it is vital that the film is strong. In many applications good processability is required to meet the high production rates needed for industrial applications.

The polymer chemist is constantly striving to improve the properties of the polymers he manufactures. There is the need therefore for polymers to be readily processable, e.g. extrudable in order that they can be manipulated easily. The polymers need good mechanical properties, e.g. high stiffness, impact strength, and should also possess low permeability to gases and water etc. Appearance is also critical as the end consumer is very sensitive to aesthetics. Unfortunately, it is known that improvements in certain properties tends to detrimentally affect others. The chemist is thus looking for an ideal balance of properties to maximise polymer performance.

The present inventors set out to try to improve the mechanical properties of polyethylene to provide polymers with, inter alia, excellent impact strength without affecting processability. The present inventors have found a composition with a specific multimodal molecular weight distribution which possess excellent mechanical properties, exemplified by its high charpy impact strength at low temperature. The claimed composition also allows the formation of articles, in particular mouldings and films, which possess excellent environmental stress cracking resistance. All this can be achieved at low viscosity when using high shear rates meaning processability is maintained.

Moreover, the compositions of the invention have been found to be particularly useful in film applications. Films are widely used in food packaging, e.g. in the packaging of cereals. Such films require barrier properties, i.e. they should be impervious to moisture, to prevent degradation of the packaged product. This is normally achieved by laminating a film layer onto a barrier layer such as an aluminium layer or a polyethylene terephthalate layer using known techniques.

An essential requirement for a film used in packaging is that it should be strong. The film needs therefore to maintain its integrity once the package is opened. A recognised problem with high density polyethylene (HDPE) films is a tendency of the film to tear. For example, when a cereal packet or the like is opened, a tear is often accidentally introduced into the packaging film. The tear has a tendency to propagate across the entire film causing the contents to spill out.

WO96/18678 identifies this problem and notes that the problem has been addressed by combining HDPE with small amounts of LLDPE with limited success. The theory here is that the long chain branching in the LLDPE might help to prevent the tear propagating. A consequence of the addition of the LLDPE is however a large increase in elongation at break thus making such polymers unsuitable for use as shopping bags for example where elongation is unacceptable.

WO96/18678 proposes an alternative solution to the problem of tear propagation via combination of the HDPE with a rubber component.

The combination of HDPE and LLDPE is also discussed in AU199863688 where sealant resin compositions are described which provide excellent impact strength and transparency. The inventors identify that the combination gives rise to a film having excellent low temperature impact strength and the film is thus ideal for applications in which the packaged product is to be frozen.

The combination of mLLDPE and HDPE has been further studied by Cowell et al in Plastic film & Sheeting, vol. 18, April 2002. Here the scientists compare the barrier properties and optical properties of various combinations of LLDPE and HDPE to establish an optimum mixing ratio.

The present inventors aim to solve a different problem. When opening products packaged with HDPE films, there is a tendency for the film to snap. In order to open the packet, sufficient force has to be applied in the transverse direction to break the seal. Once sufficient force is applied the seal breaks and the packet opens but inevitably, force is still being applied and is then translated into force in the machine direction. Thus, if the bag does not have sufficient strain in the transverse direction it may split. Moreover, the package requires tear resistance in the machine direction to resist tearing after the seal breaks. To avoid this problem the skilled polymer chemist needs to ensure that the film possesses excellent tensile strain at break in the transverse direction as well as tear resistance in the machine direction. This allows the film to be very strong in the direction force is applied when the seal is broken.

The inventors have surprisingly found that films, particularly films made using particular blow up conditions, and using the polyethylene composition of the invention exhibit remarkable tensile strain at break as compared to HDPE alone.

Thus, viewed from one aspect, the invention provides a polyethylene composition comprising at least a first composition and a second composition in amounts of

at least 70 wt% of the first composition which comprises at least:

(A) up to 60 wt%, preferably 20 to 60 wt%, lower molecular weight (LMW) polyethylene homo or copolymer obtained by Ziegler-Natta catalysis having a density of at least 940 kg/m$^3$; and

(B) up to 60 wt%, preferably 20 to 60% higher molecular weight (HMW) polyethylene homo or copolymer obtained by Ziegler-Natta catalysis and having lower density than component (A); and

up to 30 wt% of the second composition which comprises:

(C) a polyethylene homo or copolymer obtained by single site catalysis (SSC) and having a density of up to 980 kg/m$^3$;

wherein said polyethylene composition has a charpy impact strength at -20°C, according to ISO 179-3 on compression moulded plates of at least 2.5 kJ/m$^2$ and density at least of 925 kg/m$^3$.

Viewed from another aspect, the invention provides a process for the manufacture of a polymer film comprising:

obtaining a polymer composition comprising at least 70% wt of a multimodal Ziegler-Natta produced HDPE, e.g. a first composition as described above, or chromium HDPE and 3 to 30% wt of a unimodal mLLDPE;

extruding and then blowing said film at blow up ratio of 2:1 to 4:1

so as to obtain a film having a tensile strain at break in the transverse direction of at least 550% (e.g. for a 30 micron film).

Viewed from another aspect the invention provides a film obtained by a process as hereinbefore described.

For the purposes of clarity if a parameter such as tensile strain at break is quoted for a 30 micron film it represents the value which a film would possess should it be formulated as a 30 micron film.

In the first embodiment of the invention as described above, the second composition which forms part of the overall polyethylene composition comprises a component (C). This may form the only polymer component in the second composition or the second composition may contain other polymer components.

Component (C) is a polyethylene homo or copolymer, preferably copolymer, produced using single site catalysis, e.g. metallocene catalysis. Any single site, e.g. metallocene catalyst may be used to form component (C). Metallocene catalysts are well known in the art and form polymers that are typically readily distinguishable from polymers formed by Ziegler-Natta catalysts (e.g. they have very different composition breadth distribution indexes (CBDI), different molecular weight distributions etc).

Component (C) can be unimodal or multimodal, e.g. bimodal, with respect to weight average molecular weight distribution. Unless otherwise stated, the terms unimodal or bimodal as used generally herein refers to modality with respect to weight average molecular weight. In a preferable embodiment component (C) is preferably unimodal. By unimodal is meant that its molecular weight profile (measured by GPC) contains a single peak.

Component (C) should preferably form 2 to 25% by weight, e.g. 3 to 20% wt, preferably 10 to 20 % by weight. Alternatively for some embodiments 4 to 15 % by weight, more preferably 5 to 15 wt%, e.g. 6 to 12 wt%, especially around 10 wt% of the polyethylene composition are desired.

Component (C) may have a density of up to 960 kg/m$^3$, such as up to 945 kg/m$^3$, preferably in the range of from 880 to 940 kg/m$^3$, e.g. 900 to 940 kg/m$^3$) preferably 915 to 934 kg/m$^3$, e.g. 918 to 934 kg/m$^3$, especially 920 to 930 kg/m$^3$ (ISO 1183). Component (C) is preferably a linear low density polyethylene polymer (thus an mLLDPE), especially for film applications. In such applications any mLLDPE has preferred properties as discussed for Component (C). Whilst component (C) may contain long chain branching, most preferably it is completely linear, i.e. it has no measurable amount of long chain branching. Long chain branching can be detected using C$^{13}$ NMR.

The properties of component (C) can vary depending on the intended use of the overall polyethylene composition. For moulding applications, e.g. injection moulding applications, preferred densities include 880 to 937 kg/m$^3$. For film 915 to 940 kg/m$^3$ is preferred.

Component (C) is preferably a copolymer formed from ethylene along with at least one C$_{3-12}$ alpha-olefin comonomer, which can be linear or branched, such as propene, butene, pentene, hexene, heptene, octene, nonene and decene, preferably but-1-ene, hex-1-ene oroct-1-ene. Preferably, component (C) is an ethylene hexene copolymer or ethylene butene copolymer. The amount of comonomer incorporated is preferably 0.3 to 25 wt% relative to ethylene. Thus, component (C) may be a soft polyethylene copolymer having a comonomer content of 10 to 20 wt%. Preferably however, component (C) is an mLLDPE whose comonomer content might be 1 to 10 % wt, e.g. 0.3 to 3 mol% relative to ethylene, such as 1 to 2 mol%. As well known, component (C) may also be multimodal, including bimodal, with respect to the comonomer distribution.

The MFR$_{21}$ (melt flow rate ISO 1133 at 190°C under a load of 21.6 kg) of Component (C) should preferably be greater than 0.01 g/10 min.

The MFR$_2$ (melt flow rate ISO 1133 at 190°C under a load of 2.16 kg) of Component (C) should preferably be in the range 0.5 to 40 g/10 min, preferably 0.8 to 20 g/10 min, e.g. 0.9 to 15 g/10min. Highly preferred ranges include 1.0 to 6.0 g/10 min, preferably 1.4 to 4 g/10 min (especially for moulding applications) and 0.9 to 2.0g/10min (especially for film applications).

FRR$_{5/2}$ ratio of component (C) may be in the range 2.5 to 3.0, e.g. 2.53 to 2.8, especially 2.56 to 2.7, particularly in moulding applications.

The Mw of component (C) may be less than 2,000,000, preferably less than 1,000,000, more preferably less than 250,000, e.g. between 100,000 - 150,000, such as less than 150,000 or 110,000-140,000. The Mw/Mn (MWD) value thereof should preferably be 2.0 to 5, e.g. 2.5 to 4, more preferably 2.1 to 4, preferably for moulding end applications 2.2 to 3.0 and for film applications 3.0 to 3.5 (GPC).

Component (C) is produced using a single site catalyst, e.g. a catalyst comprising a metal coordinate by one or more η-bonding ligands. Such η-bonded metals are typically Zr, Hf or Ti, esp ecially Zr or Hf. The η-bonding ligand is typically an η$^5$-cyclic ligand, i.e. a homo or heterocyclic cyclopentadienyl group optionally with fused or pendant substituents. Such single site, preferably metallocene procatalysts, have been widely described in the scientific and patent literature for about twenty years.

The metallocene procatalyst may have a formula II:

$$(Cp)_m R_n MX_q \ (II)$$

wherein:

each Cp independently is an unsubstituted or substituted and/or fused homo- or heterocyclopentadienyl ligand, e.g. substituted or unsubstituted cyclopentadienyl, substituted or unsubstituted indenyl or substituted or unsubstituted fluorenyl ligand;

the optional one or more substituent(s) being independently selected preferably from halogen, hydrocarbyl (e.g. C1-C20-alkyl, C2-C20-alkenyl, C2-C20-alkynyl, C3-C12-cycloalkyl, C6-C20-aryl or C7-C20-arylalkyl), C3-C 12-cycloalkyl which contains 1, 2, 3 or 4 heteroatom(s) in the ring moiety, C6-C20-heteroaryl, C 1-C20-haloalkyl, -SiR"$_3$, -OSiR"$_3$, -SR", -PR"$_2$ or -NR"$_2$,

each R" is independently a hydrogen or hydrocarbyl, e.g. C 1-C20-alkyl, C2-C20-alkenyl, C2-C20-alkynyl, C3-C12-cycloalkyl or C6-C20-aryl; or e.g. in case of -NR"$_2$, the two substituents R" can form a ring, e.g. five- or six-membered ring, together with the nitrogen atom to which they are attached;

R is a bridge of 1-7 atoms, e.g. a bridge of 1-4 C-atoms and 0-4 heteroatoms, wherein the heteroatom(s) can be e.g. Si, Ge and/or O atom(s), wherein each of the bridge atoms may bear independently substituents, such as C1-C20-alkyl, tri(C1-C20-alkyl)silyl, tri(C1-C20-alkyl)siloxy or C6-C20-aryl substituents); or a bridge of 1-3, e.g. one or two, hetero atoms, such as silicon, germanium and/or oxygen atom(s), e.g. -SiR$^1_2$-, wherein each R$^1$ is independently C1-C20-alkyl, C6-C20-aryl or tri(C1-C20-alkyl)silyl- residue, such as trimethylsilyl;

M is a transition metal of Group 3 to 10, preferably of Group 4 to 6, such as Group 4, e.g. Ti, Zr or Hf, especially Hf;

each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", - PR"$_3$, -SiR"$_3$, -OSiR"$_3$, -NR"$_2$ or -CH$_2$-Y, wherein Y is C6-C20-aryl, C6-C20-heteroaryl, C1-C20-alkoxy, C6-C20-aryloxy, NR"$_2$, -SR", -PR"$_3$, -SiR"$_3$, or - OSiR"$_3$;

each of the above mentioned ring moieties alone or as a part of another moiety as the substituent for Cp, X, R" or R$^1$ can further be substituted e.g. with C1-C20-alkyl which may contain Si and/or O atoms;

n is 0, 1 or 2, e.g. 0 or 1,

m is 1, 2 or 3, e.g. 1 or 2,

q is 1, 2 or 3, e.g. 2 or 3,

wherein m+q is equal to the valency of M.

Suitably, in each X as -CH$_2$-Y, each Y is independently selected from C6-C20-aryl, NR"$_2$, -SiR"$_3$ or -OSiR"$_3$. Most preferably, X as -CH$_2$-Y is benzyl. Each X other than -CH$_2$-Y is independently halogen, C1-C20-alkyl, C1-C20-alkoxy, C6-C20-aryl, C7-C20-arylalkenyl or -NR"$_2$ as defined above, e.g. -N(C1-C20-alkyl)$_2$.

Preferably, q is 2, each X is halogen or -CH$_2$-Y, and each Y is independently as defined above.

Cp is preferably cyclopentadienyl, indenyl, tetrahydroindenyl or fluorenyl, optionally substituted as defined above.

In a suitable subgroup of the compounds of formula II, each Cp independently bears 1, 2, 3 or 4 substituents as defined above, preferably 1, 2 or 3, such as 1 or 2 substituents, which are preferably selected from C1-C20-alkyl, C6-C20-aryl, C7-C20-arylalkyl (wherein the aryl ring alone or as a part of a further moiety may further be substituted as indicated above), -OSiR"$_3$, wherein R" is as indicated above, preferably C 1-C20-alkyl.

R, if present, is preferably a methylene, ethylene or a silyl bridge, whereby the silyl can be substituted as defined above, e.g. a (dimethyl)Si=, (methylphenyl)Si= or (trimethylsilylmethyl)Si=; n is 0 or 1; m is 2 and q is two. Preferably, R" is other than hydrogen.

A specific subgroup includes the well known metallocenes of Zr, Hf and Ti with two eta$^5$-ligands which may be bridged or unbridged cyclopentadienyl ligands optionally substituted with e.g. siloxy, or alkyl (e.g. C1-6-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or - SiMe$_2$.

The preparation of the metallocenes can be carried out according or analogously to the methods known from the literature and is within skills of a person skilled in the field. Thus for the preparation see e.g. EP-A-129 368, examples of compounds wherein the metal atom bears a -NR"$_2$ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

Alternatively, in a further subgroup of the metallocene compounds, the metal bears a Cp group as defined above and additionally a eta$^1$ or eta$^2$ ligand, wherein said ligands may or may not be bridged to each other. Such compounds are described e.g. in WO-A-9613529, the contents of which are incorporated herein by reference.

Further preferred metallocenes include those of formula (I) Cp'$_2$HfX'$_2$ wherein each X' is halogen, C$_{1-6}$ alkyl, benzyl or hydrogen; Cp' is a cyclopentadienyl or indenyl group optionally substituted by a C$_{1-10}$ hydrocarbyl group or groups and being optionally bridged, e.g. via an ethylene or dimethylsilyl link. Bis (n-butylcyclopentadienyl) hafnium dichloride and Bis (n-butylcyclopentadienyl) hafnium dibenzyl are particularly preferred.

Metallocene procatalysts are generally used as part of a catalyst system which also includes a cocatalyst or catalyst activator, for example, an aluminoxane (e.g. methylaluminoxane (MAO), hexaisobutylaluminoxane and tetraisobutylaluminoxane) or a boron compound (e.g. a fluoroboron compound such as triphenylpentafluoroboron or triphentylcarbenium tetraphenylpentafluoroborate (($C_6H_5$)$_3$B$^+$B-($C_6F_5$)$_4$)). The preparation of such catalyst systems is well known in the field.

If desired the procatalyst, procatalyst/cocatalyst mixture or a procatalyst/cocatalyst reaction product may be used in unsupported form or it may be precipitated and used as such. One feasible way for producing the catalyst system is based on the emulsion technology, wherein no external support is used, but the solid catalyst is formed from by solidification of catalyst droplets dispersed in a continuous phase. The solidification method and further feasible metallocenes are described e.g. in WO03/051934 which is incorporated herein as a reference.

The activator is a compound which is capable of activating the transition metal component. Useful activators are, among others, aluminium alkyls and aluminium alkoxy compounds. Especially preferred activators are aluminium alkyls, in particular aluminium trialkyls, such as trimethyl aluminium, triethyl aluminium and tri-isobutyl aluminium. The activator is typically used in excess to the transition metal component. For instance, when an aluminium alkyl is used as an activator, the molar ratio of the aluminium in the activator to the transition metal in the transition metal component is from I to 500 mol/mol, preferably from 2 to 100 mol/mol and in particular from 5 to 50 mol/mol.

It is also possible to use in combination with the above-mentioned two components different co-activators, modifiers and the like. Thus, two or more alkyl aluminium compounds may be used, or the catalyst components may be combined with different types of ethers, esters, silicon ethers and the like to modify the activity and/or the selectivity of the catalyst, as is known in the art.

Suitable combinations of transition metal component and activator are disclosed among others, in the examples of WO 95/35323.

The polymerisation process for component (C) may be effected analogously to known methods. Where component (C) is unimodal, the polymerisation is preferably a slurry process. If component (C) is bimodal, the process may be a multistage (in-situ) process or the different components may be blended mechanically as known in the art. If component (C) is multimodal, it is preferably prepared in a manner analogous to the process described below for components (A) and (B).

Suitable component (C) polymers are, for example, available commercially from polymer suppliers such as Borealis A/S.

The molecular weight of component (A) must be lower than that of component (B). Components (A) and (B) are formed using Ziegler-Natta catalysis. Such polymers are typically readily distinguishable from those produced using metallocene catalysts (they have broader CBDI, broader MWD, more heterogeneous branching etc). The use of Ziegler-Natta catalysts to manufacture polyethylenes is well known and will be readily carried out by the skilled man.

Components (A) and (B) preferably form part of a multimodal Ziegler-Natta polyethylene copolymer. By multimodal is meant that the polymer should comprise at least two components of differing weight average molecular weights. The different components may both be ethylene copolymers or ethylene homopolymer, although preferably at least one of the components is an ethylene copolymer. Thus, the first composition may also be uni- or preferably multimodal, e.g. bimodal, with respect to the commoner distribution.

Preferably Component (A) has less comonomer than component B by a factor of at least 3 and most preferably it is a homopolymer.

In component (A) or (B), the majority of the monomer units are ethylene, e.g. at least 90% by weight of ethylene. Minor comonomer contributions, e.g. up to 20 %, preferably up to 10% by weight, more preferably up to 5% by weight, may derive from other copolymerizable monomers, generally one or more C3-20, especially C3-10-comonomers, particularly singly or multiply ethylenically unsaturated comonomers, which may be linear or branched, in particular C3-10 alpha-olefins such as propene, butene, pentene, hexene, heptene, octene, nonene or decene, 4 - methyl-pent-1-ene etc. Hex-1-ene, oct-1-ene and but-1-ene comonomers are preferred, especially but-1-ene or hex-1-ene, most especially but-1-ene. Most preferably, comonomer level in component (B) is very low, e.g. in the range 0.03 to 3 wt%, preferably 0.05 to 1.5 wt%.

It may be noted that the term ethylene copolymer is used herein to relate to a polyethylene deriving from ethylene and one or more such copolymerisable comonomers.

The first composition may contain only components (A) and (B) or may contain further polymer components. The amounts of components (A) and (B) in the first composition may range from 5 to 95 wt% to 95 to 5 wt%, 10 to 90 wt% to 90 to 10 wt%, e.g. 35 to 65 wt% to 65 to 35 wt%, preferably 40 to 60 wt% to 60 to 40 wt%.

Component (A) may form 35 to 55 wt% of the overall polyethylene composition. It is preferably a homopolymer. Component (A) should have a density of greater than 950 kg/m$^3$, e.g. 955 to 980 kg/m$^3$, preferably greater than 960 kg/m$^3$, especially 965 to 975 kg/m$^3$. For film applications, a density greater than 965 kg/m$^3$ is preferred.

Its Mw/Mn is preferably greater than 2.0, e.g. greater than 3.5, preferably more than 5, e.g. more than 7. The upper limit may be 20, e.g. 15. For film applications, molecular weight distribution (ratio of the weight average molecular weight to the number average molecular weight) may be in the range 2 -50, preferably 3-20, more preferably 4-20, especially 6 to 13.

Its $MFR_2$ is preferably in the range 1 to 2000 g/10 min, more preferably 10 to 1500 g/10 min, especially 50 to 1000, e.g. 200 to 600 g/10min. For moulding applications, e.g. injection moulding applications, values may range from 10 to 500 g/10 min, preferably 20 to 400 g/10 min, e.g. 250 to 320 g/10 min. For film applications $MFR_2$ may be in the range 10-1000 g/10 min, preferably 50-800 g/10 min, especially 50 to 600 g/10 min.

For film applications Component (A) may have a weight average molecular weight of 10,000-90,000, preferably 20,000-80,000, especially 20,000 to 70,000.

Component (B), which is preferably a copolymer, may form 35 to 55 wt% of the overall polymer composition. Preferably, especially in moulding applications, component (B) should have a Mw/Mn of greater than 2.0, e.g. 3.5 to 20, e.g. 5 to 16, preferably 6 to 12, especially 6 to 9, such as 6-8.

Its density may be less than 960 kg/m$^3$, preferably 915 to 960 kg/m$^3$. For injection moulding applications, the density may be around 950 to 965 kg/m$^3$.

Its $MFR_{21}$ can vary over a broad range, e.g. 0.1 to 100 g/10 min. For injection moulding, higher values are preferred, e.g. 60 to 100 g/10 min.

The weight average molecular weight of component (B) may be 60,000-500,000, preferably at least 65,000, e.g. 100,000 to 400,000.

As mentioned above, components (A) and (B) generally take the form of a multimodal, e.g. bimodal polymer. By bimodal it is meant that the polymer consists of two fractions (components), one of which has a relatively lower molecular weight and a relatively higher density and another of which has a relatively higher molecular weight and a relatively lower density. Whilst both these components may be copolymers, it is preferred if the lower molecular weight component is an ethylene homopolymer and the higher molecular weight component is an ethylene copolymer.

Where components (A) and (B) are prepared in a multistage polymerisation reaction, it will be appreciated that it will be impossible to measure directly the properties of the second formed component. Nevertheless, the properties of this component can be derived from an analysis of the first polymer composition and the first formed component. Such calculations can be carried out using various techniques, e.g. K. B. McAuley: Modelling, Estimation and Control of Product Properties in a Gas Phase Polyethylene Reactor. Thesis, McMaster University, August 1991. or K. McAuley and J. McMacGregor, AIChE Journal, Vol. 37, no. 6, pages 825 - 835. B. Hagström: Prediction of melt flow rate (MFR) of bimodal polyethylenes based on MFR of their components, in: Conference on Polymer Processing (The Polymer Processing Society), Extended Abstracts and Final Programme, Gothenburg, August 19-21, 1997, 4:13. In addition, subtracting GPC curves, when fractions of each polymer are known is possible.

The overall $FRR_{5/2}$ of the first composition may be 3.2 to 3.6 for mould ing applications.

Preferably, and in particular in moulding applications, the $FRR_{5/2}$ value satisfies the equation, $FRR_{5/2}>c(MFR_5)^{-0.1}$ where c is a constant of value 4.2 to 5.5 preferably 4.4 to 5.0.

Overall density of the first composition may be at least 930 $kg/m^3$, preferably in the range density of 940-975 $kg/m^3$, preferably 945-970 $kg/m^3$, in particular 950-970 $kg/m^3$. The density of the first composition may again vary depending on the end use of the composition. For moulding, densities in the range 950 to 980 $kg/m^3$ e.g. 956 to 965 $kg/m^3$ are appropriate. In another embodiment, e.g. for film, densities of 950-970 $kg/m^3$ are preferred.

The weight average molecular weight of the first composition may be at least 60,000, e.g. 65,000 to 500,000, more preferably 70 to 300,000, most preferably 75,000 to 250,000 or 75,000 to 100,000 depending on the end application. For film applications, particular Mw's for the first composition may be at least 80 kD, e.g. 100-200 kD.

The molecular weight distribution (ratio of the weight average molecular weight to the number average molecular weight)) of the first composition may be 2 - 50, preferably 3-40, more preferably 4-30.

Its comonomer content, i.e. non-ethylene monomer units, may be at least 0.1% by weight, e.g. up to 6% by weight. Preferably, the first composition contains 0.2-5% by weight, preferably 0.5-3% by weight, more preferably 0.1 to 2.5 wt%, of non-ethylene monomer units.

Crystalline melting point of the first composition may be between 125 and 140°C, as determined by DSC analysis.

The crystallinity of the first composition may be 50 to 90 %, preferably 60-85%, more preferably 65-80%, as determined by DSC analysis.

Components (A) and (B) are made using Ziegler-Natta polymerisation catalysts. Preferred catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, EP 810235 and WO 99/51646. The catalysts disclosed in WO 95/35323 are especially useful as they are well suited in production of both a polyethylene having a high molecular weight and a polyethylene having a low molecular weight. Thus, especially preferably the transition metal component comprises a titanium halide, a magnesium alkoxy alkyl compound and an aluminium alkyl dihalide supported on an inorganic oxide carrier.

In one embodiment a catalyst of Ziegler Natta type, wherein the active components are dispersed and solidified within Mg-based support by the emulsion/solidification method adapted to PE catalyst, e.g. as disclosed in WO03106510 of Borealis, e.g. according to the principles given in the claims thereof.

In another preferable embodiment, the catalyst is a non-silica supported catalyst, i.e. the active components are not supported to an external silica support. Preferably, the support material of the catalyst is a Mg-based support material. Examples of such preferred Ziegler-Natta catalysts are described in EP 0 810 235..

In principle any polymerisation method including solution, slurry and gas phase polymerisation can be used for producing the polyethylene composition of the invention as well as its components.

The components (A) and (B) are preferably produced in a multistage process using one or more polymerisation reactors, which may be the same or different, e.g. at least slurry-slurry, gas phase-gas phase or any combination of slurry and gas phase polymerisations. Each stage may be effected in parallel or sequentially using same or different polymerisation method. In case of a sequential stages each component, e.g. (A) and (B), may be produced in any order. Preferably, the catalyst used in the preceding steps is present in the subsequent polymerisation step(s). Alternatively, further catalyst, which can be the same or different than that used in the preceding step, can be added in the subsequent step(s).

Preferably, at least one component (A) or (B) is produced in a slurry reactor, preferably in a loop reactor. The other components is preferably produced by gas phase polymerization in a gas phase reactor.

In is within the scope of the invention however for a multimodal, e.g. at least bimodal, polymer composition, e.g. the first composition, to be produced by blending each or part of the components in-situ during the polymerisation process thereof (so called in-situ process) or, alternatively, by blending mechanically two or more separately produced components in a manner known in the art.

It is also possible to produce a multimodal polymer composition in one reactor by selecting e.g. one or more of the following: (1) changing polymerisation conditions, (2) using at least two different catalysts.

In one embodiment the process for producing the first polymer composition comprises:

(a) polymerising in a slurry reactor zone, preferably a loop reactor, ethylene, optionally together with one of more comonomers, in the presence of a Ziegler-Natta polymerisation catalyst to produce the first polymer component, and, optionally, transferring the reaction product of step (a) to a subsequent gas phase reactor zone,

(b) polymerising in a gas phase reactor zone ethylene, optionally together with one or more comonomers, in the presence of the reaction product of step (a) to produce a second polymer component.

and recovering the obtained composition.

A preferred multistage process is a "loop-gas phase"-process, such as developed by Borealis (known as BORSTAR® technology) described e.g. in patent literature, such as in EP 0887 379 or EP 517 868.

If the polymer composition is multimodal, the LMW fraction is preferably produced in step (a) and the HMW fraction is produced in a subsequent step (b) in the presence of component (A) as obtained from the first reactor.

Optionally, the process can further comprise a prepolymerisation step in a manner known in the field, which prepolymerisation step may precede e.g. step (a).

The process of the invention is preferably a continuous process. The conditions for the slurry reactor, preferably loop reactor, of step (a) may be as follows:

- a diluent is used, which diluent can be an aliphatic hydrocarbon in a manner known in the art - the boiling point of the diluent may be 710 to +100°C;
- the temperature is within the range of 40°C to 110°C, preferably between 60°C and 100°C or 70 - 110°C (in some applications even 85-110°C may be used):
- the pressure is at least 5 bar, typically within the range of 20 bar to 80 bar, preferably between 30 bar to 70 bar, e.g. 30 to 50 bar;
- hydrogen can be added for controlling the molar mass in a manner known per se;
- the residence time is typically 0.5 to 5 hours, e.g. 0.5 to 1 hr.

The reaction mixture from the slurry (loop) reactor is transferred to th e gas phase reactor, i.e. to step (b), in a known manner and conditions in step (b) are preferably as follows:

- the temperature is within the range of 50°C to 130°C, preferably between 60°C and 115°C,
- the pressure is within the range of 10 bar to 60 bar, preferably between 10 bar to 40 bar,
- hydrogen can be added for controlling the molar mass in a manner known per se,
- the residence time is typically 1 to 8 hours

The properties of the polymer composition can be adjusted or controlled in a known manner e.g. with one or more of the following process parameters: hydrogen feed, comonomer feed, monomer feed, catalyst feed and residence times in the reactor. As well known, the adjustment of said MFR values to a desired level may be effected during the polymerisation process by adjusting and controlling the process conditions, e.g. by regulating the molecular weight of the polymerisation product using a molecular weight regulator, e.g. hydrogen. The above described process of the invention enable highly feasible means for producing and further tailoring the polymer composition of the invention.

If desired, the polymerisation may be effected in a known manner under supercritical conditions in the slurry, preferably loop reactor, and/or as a condensed mode in the gas phase reactor.

The gas phase polymerisation may be conducted in a manner known in the art, such as in a bed fluidised by gas feed or in mechanically agitated bed. Also fast fluidisation may be utilised.

Suitable bimodal polymers of use in this invention are, for example, commercially available from polymer suppliers such as Borealis A/S.

For film applications, a further embodiment of the invention is for the first composition to be replaced by a high density unimodal polyethylene copolymer made using chromium catalysis. Cr HDPE's can be made in a slurry process where the reaction temperature will generally be in the range 60 to 110°C (e.g. 85 -110°C), the reactor pressure will generally be in the range 5 to 80 bar (e.g. 35-50 bar), and the residence time will generally be in the range 0.3 to 5 hours (e.g. 0.5 -1). The diluent used will generally be an aliphatic hydrocarbon having a boiling point in the range -70 to +100°C.

The preferred properties of such a polymer are the same as those described above for the first composition.

To form the final composition, component (C) may be blended, e.g. mechanically blended, with components (A) and (B) using conventional blending apparatus. Blending may be conveniently effected in an extruder. After the first composition polymer is collected from the reactor and the hydrocarbon residues are removed therefrom, component C is added and the polymer is compounded and extruded to pellets. In this process step, any extruder known in the art may be used. It is preferred, however, to use a twin screw extruder. It may be of a co-rotating type, such as those produced by Werner & Pfleiderer having a designation ZSK. Alternatively, it may be of a counter-rotating type, such as those produced by Japan Steel Works, having a designation JSW CIM-P, e.g. CIM90P or LCM continuous mixer by Kobe Steel, such as LCM500H, or Farrel continuous mixer (FCM) by Farrel. It is especially preferred to use a counter-rotating twin screw extruder.

The extruder may contain one or more gear pumps and throttle valves. This equipment can be used to improve the homogeneity of the polymer composition or to increase the capacity of the extruder. Such a solution is disclosed, among others, by T. Fukui and R. Minato: "LCM Continuous Mixer/Gear Pump System for Polyolefin Resins", Society of Plastics Engineers Polyolefins VII International Conference, February 24-27, 1991, Wyndham Greenspoint Hotel, Houston, Texas.

Before the extrusion the polymer may be mixed with the desired additives.

Alternatively, the component (C) may be blended with components (A) and (B) in-situ in a multistage process, whereby the components (A), (B) and (C) may be produced in any order in the presence of any previous component(s), by changing, when needed, the appropriate catalyst.

The properties of the final composition of the invention may vary depending on the desired end application of the polymer as long as the charpy and density requirements are meet. For specific film applications the properties of the film may be adjusted over a wide range as long as the necessary tensile strength at break value is produced.

The final polymer composition may have one or more of the following features:

$MFR_2$ of 0.2-50 g/10 min, preferably 1-20 g/10 min, in particular 2-10 g/10 min, measured according to ISO 1133 at 190°C and under 2.16 kg load. $MFR_5$ of 10 to 50, e.g. 20 to 40 g/10min.

For moulding applications, $MFR_2$ may be in the range 0.01 to 100 g/10 min. For blow moulding values less than 0.2, preferably less than 0.05 g/10min are preferred. For injection moulding values of at least 0.8 g/10min, e.g. 1 to 30 g/10 min are preferred. In general for moulding applications, values of at least 2 g/10min, preferably more than 6g/10min, e.g. 6-9 g/10 min can be employed. For film applications 0.2-50 g/10 min, preferably 0.3-20 g/10 min, in particular 0.4-8 g/10 min are preferred.

$MFR_5$ for moulding applications may be from 0.3 - 100 g/10 min, preferably 0.8 - 60 g/10min, especially 3 to 50, e.g. 8 to 40g/10min. The combined range (all applications, e.g. moulding and film) could be preferably 0.1 - 100 g/10min, more preferably 0,2-60 g/10min.

$FRR_{5/2}$, especially for moulding applications, of the final composition may be up to 10, e.g. 3 to 5. Preferably, the $FRR_{5/2}$ value satisfies the equation, $FRR_{5/2} > d(MFR_5)^{-0.1}$ where d is a constant of value 4.2 to 5.5 preferably 4.4 to 5.0.

Density of the final composition may be at least 925 kg/m$^3$, e.g. at least 935 kg/m$^3$, preferably 940-975 kg/m$^3$, preferably 945-970 kg/m$^3$, in particular 950-968 kg/m$^3$.

Comonomer content in the final composition may be up to 5% by weight, e.g. 0.01-4% by weight, preferably 0.02-1% by weight, more preferably 0.03 to 0.7 wt% as measured by FTIR. For film applications, comonomer content of 0.2-5% by weight, preferably 0.5-3% by weight, more preferably 0.1 to 2.5 wt% is appropriate.

The crystalline melting point may be between 125 and 140°C, as determined by DSC analysis. The crystallinity is typically 60-85%, more preferably 65-80%, as determined by DSC analysis.

The polyethylene composition may contain minor amounts of additives such as pigments, nucleating agents, antistatic agents, polymer processing agent, fillers, antioxidants, UV stabilisers as is known in the art.

When compared to conventional bimodal polyethylene the polymer compositions of the invention are believed to possess improved impact resistance and preferably also wear properties (e.g. abrasion resistance). When compared to a composition comprising a unimodal ZN and mLLDPE component, the compositions of the invention possess lower viscosity at higher shear rates leading to improved processability, improved melt strength, improved environmental stress crack resistance (ESCR), and improved creep. The compositions of the invention are also believed to provide low permeability at certain blend ratios (this is advantageous both for films, e.g. which are used for packaging of dry cereals) and also for bottles and especially bottle caps which should have low penetration of water, carbon dioxide and oxygen) and smooth article surfaces.

Thus, the charpy impact strength (23°C) of the polymer composition, especially for moulding applications, may be at least 5 kJ/m$^2$, more preferably at least 5.5 kJ/m$^2$.

The charpy impact strength at -20°C, according to ISO 179-3 on compression moulded plates should be at least 2.5 kJ/m$^2$, preferably at least 2.7, especially at least 3.0, e.g. at least 3.1 kJ/m$^2$.

It is also envisaged that the improvements in Charpy do not detrimentally affect ESCR. This is of particular importance in moulding applications. The stress crack of the polyethylene composition of the invention can be measured using FNCT. Preferred FNCT values at 50°C and 3.5 MPa are at least 15 h.

Tensile modulus values should also be high, especially for moulding applications, e.g. at least 700 MPa, e.g. at least 800 MPa, especial ly at least 900 MPa.

The polymer compositions of the invention may also exhibit beneficial strain at yield properties of at least 8 %, preferably at least 10%.

As mentioned above, the polyethylene composition of the invention possesses an excellent balance of mechanical and processing properties. This is particularly clear if the relationship between various parameters is considered. Thus, the composition of the invention possess an excellent charpy to MFR relationship characterised by the equation:

$$\text{Charpy}(-20°C) > A \cdot (MFR_5)^B$$

where B = -0.26 and A is 6, preferably 6.3 and more preferably 6.6.

Figure 1 shows the line this equation gives for the various constants and plots compositions of the invention relative to bimodal Ziegler-Natta materials without the second unimodal metallocene composition. It is a double log plot. The chemist seeks high MFR, high impact materials but the higher the MFR the lower the impact. The claimed compositions provide an excellent balance of these properties.

Figure 2 shows the relationship between Charpy and FNCT and shows the high impacts, high FNCT values achieved using the compositions of the invention.

Rheology is another important feature of the polymer compositions of the invention. For moulding applications, e.g. injection moulding applications, the SHI 5/50 may range from 3-6.5, more preferably 3.1-6, more preferably 3.2 -3.7, most preferably 3.3 - 3.5. Preferably, and especially where the composition is for use in moulding applications, the compositions satisfy the following equation:

$$SHI\ (5kPa/50kPa) / ((Eta300/200))^{0.5}$$

should have a value of 4.7 to 9, preferably 5 to 8, more preferably 5.3 to 7.5 and most preferably 5.5 to 7.

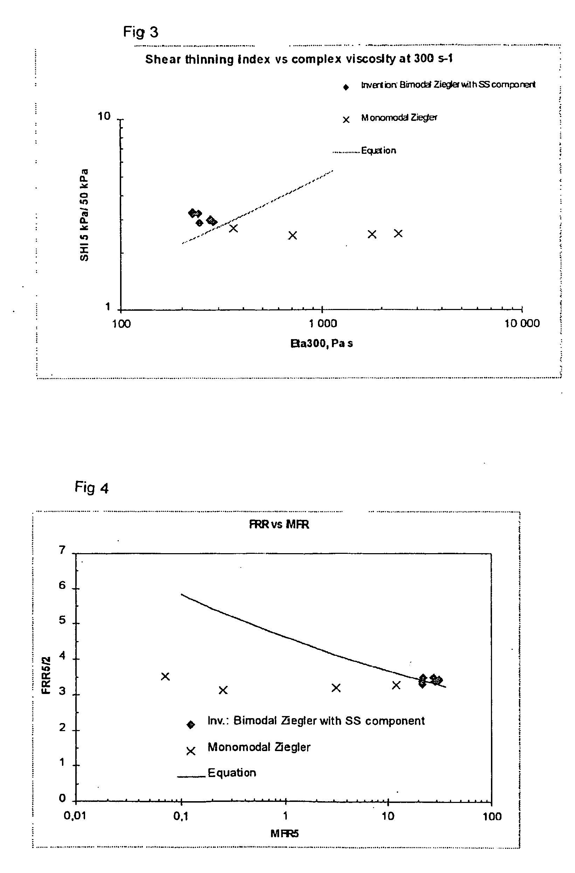

This is plotted in Figure 3 and clearly shows that the compositions of the invention have advantageous properties over monomodal Ziegler species. The figure shows that the compositions of the invention have higher shear rates at low viscosity than monomodal Ziegler compositions meaning improvements in processability thereover.

The compositions of the invention also preferably satisfy the following equation:

$$FRR_{5/2} \geq 3.2 \cdot ((MFR_5)/40)^K$$

where K is -0.03, preferably -0.04 especially -0.06. This equation is plotted in Figure 4 and shows that the polymers of the invention show higher $MFR_5$ at the same $FRR_{5/2}$. This confirms the compositions of the invention perform better than monomodal Ziegler single site mixtures in terms of processability.

The polymer composition of the invention may be provided in pellet or powder form, preferably powder.

The polymer composition described above may be formed into articles, e.g. moulded articles, especially injection moulded articles using known techniques. The polyethylene composition can also be formed into films. Films may have a thickness of 6 to 200 microns, preferably 10 to 150 microns, e.g. 20 to 80 microns. These films may be monolayer or multilayer films.

The film of the invention will typically be produced by extrusion through an annular die, blowing into a tubular film by forming a bubble which is collapsed between nip rollers after solidification. This film can then be slit, cut or converted (e.g. gusseted) as desired. Conventional film production techniques may be used in this regard. Typically the outer and core layer mixtures will be coextruded at a temperature in the range 160°C to 240°C, and cooled by blowing gas (generally air) at a temperature of 10 to 50°C to provide a frost line height of 2 to 8 times the diameter of the die. The blow up ratio should generally be in the range 2 to 4, preferably 2.5 to 3.

It is has surprisingly been found that films can be blown using low neck heights or using no neck at all whilst still yielding films having excellent mechanical properties. Thus, the neck during film blowing is preferably less than 5x the diameter of the extrusion die, preferably less than 2 x the diameter of the extrusion die. Suitable die diameters are in the range 100 to 250 mm.

The films of the invention also possess good tear resistance in the machine direction. Thus tear resistances (Elmendorf) can be at least 0.05 N, e.g. at least 0.1N (e.g. for a 30 micron film).

Tensile strain at break in the transverse direction may be at least 550 MPa, e.g. at least 570 MPa, preferably at least 600 MPa (e.g. for a 30 micron film).

The films may also exhibit low water permeability. Thus for a single layer 30 micron film, Water Vapour Transmission Rate may be less than 6 $g/m^2$ per 24 hours, preferably less than 5 $g/m^2$ per 24 hours, especially less than 4 $g/m^2$ per 24 hours.

The films of the invention may be modified to include an additional oxygen barrier layer as is known in the art although this is not preferred. For food and medical applications for example, it may be necessary to incorporate a barrier layer, i.e. a layer which is impermeable to oxygen, into the film structure. This can be achieved using conventional lamination techniques. Suitable barrier layers are known and include polyamide, PET and metallised A1 layers.

In such an embodiment it may be convenient to laminate the barrier layer onto two layers of film as hereinbefore described thereby forming a 3 layer film in which the barrier layer forms the middle layer.

The polymer composition of the invention has been surprisingly found to give rise to films that possess not only an ideal tensile strain at break properties but also sufficient moisture barrier properties that a conventional water barrier layer is not required. Tensile strain at break is known to increase with decreasing density but increases in tensile strain at break are therefore only achieved at the expense of barrier properties. The films of the invention provide the skilled chemist with an ideal balance of these properties.

Thus, viewed from another aspect the invention provides a film of the invention which does not comprise an additional barrier layer, e.g. a polyamide layer.

By employing the composition of the invention in one or more layers in a multilayer film, and combining it with least one other polyethylene material with lower density being at least on one of the surfaces, a multilayer film will have a combination of very good mechanical properties and good sealing properties. When films are used, they are often sealed together by heat in order to make bags etc. The sealing properties are enhanced by a low melting point of the sealing layer/surface. Then by the heating process, partial melting and satisfactory sealing is achieved in as short time as possible. The invention material should preferably be at least 40 %, preferably 50 % of the film thickness, and at least as one of its two outer layers, should be a material with a density lower than the invention material, preferably at least 10 $g/dm^3$ lower density, preferably more than 20 $g/dm^3$ lower density. The total film thickness should be between 10 and 200 microns, preferably between 20 and 100 microns. Each of the outer layers should be less than 15 % the film thickness, and these should preferably comprise at least 50 w% of ethylene copolymer based composition

A further beneficial property of the films of the invention is the low difference between conventional material density measured on pieces of plaque crystallising at a nominal cooling rate of 15 C/min and actual density measured directly on the films. It has been surprisingly found that this difference between these figures, which is normally of the order of 5 or 6 $g/dm^3$, is less than 4 $g/dm^3$ for the films of the invention, preferably, it is less than 3 $g/dm^3$. This effect is more marked on thinner films, e.g. those less than 60 microns in diameter. We believe that the seemingly ease of creation of a dense film material for the invention materials, is related to the invention materials' improved barrier properties.

Viewed from another aspect the invention provides a film comprising a polymer composition comprising at least 70% wt of a multimodal Ziegler-Natta produced HDPE or chromium HDPE and 3 to 30% wt of a unimodal mLLDPE and a tensile strain at break in the transverse direction of at least 550% (e.g. for a 30 micron film). The multimodal Ziegler-Natta produced HDPE here has preferred properties as for the first composition.

The films of the invention have a wide variety of applications but are of particular interest in packaging of food, medical devices and in heavy duty packaging. The films may act as shrink films and are thus suitable for shrink applications, e.g. to package goods for transportation.

Viewed from another aspect the invention provides a moulded article, e.g. injection moulded article or use of a composition as hereinbefore described in the manufacture of moulded articles.

Viewed from a further aspect the invention provides a process for the preparation of a composition as claimed in any of the preceding claims comprising:

polymerising ethylene or ethylene and at least one alpha olefin comonomer in the presence of a Ziegler-Natta catalyst so as to form up to 60 wt% lower molecular weight (LMW) polyethylene homopolymer or copolymer component (A) having a density of at least 940 $kg/m^3$;

polymerising ethylene or ethylene and at least one alpha olefin comonomer in the presence of a Ziegler-Natta catalyst so as to form up to 60 wt% higher molecular weight (HMW) polyethylene copolymer component (B) having lower density than component (A); and

polymerising ethylene or ethylene and at least one alpha olefin comonomer in the presence of a Single site catalyst to form up to 30% wt of polyethylene homo or copolymer having a density of up to 980 $kg/m^3$;

and blending said components in any order to form a composition which has having a charpy impact strength at -20°C, according to ISO 179-1 on compression moulded plates of at least 2.5 $kJ/m^2$ and density at least of 925 $kg/m^3$.

Blending can be effected by in-situ polymerisation in a multistage process or by blending mechanically all or part, e.g. component (C), of the components to the other components as described above.

Viewed from another aspect the invention provides a process for the preparation of a moulded article comprising:

(I) In a first, preferably slurry phase, stage polymerising ethylene in the presence of a Ziegler-Natta catalyst so as to form up to 60 wt% lower molecular weight (LMW) polyethylene homopolymer or copolymer component (A) having a density of at least 940 kg/m$^3$;

(II) In a subsequent, preferably gas phase, stage polymerising ethylene and at least one alpha olefin comonomer in the presence of the same Ziegler-Natta catalyst so as to form up to 60% higher molecular weight (HMW) polyethylene copolymer component (B) having lower density than component (A);

(III) blending, e.g. mechanically, the product of stage (II) with up to 30% wt of polyethylene homo or copolymer obtained by single site catalysis (SSC) and having a density of up to 980 kg/m$^3$;

whereby to form a composition having a charpy impact strength at -20°C, according to ISO 179-1 on compression moulded plates of at least 2.5 kJ/m$^2$ and density at least of 925 kg/m$^3$; and

(IV) moulding, e.g. injection moulding, the product of step (III) into a moulded article.

This can be achieved effectively in a Ziegler polyethylene producing plant. In this scenario the whole of the polymer composition will have been extruded two times before formation of the finished article. This ensures a very homogeneous composition (compared to adding component (C) directly to the article forming extrusion step). Moreover, the major part of the material will not have degraded.

Viewed from a further aspect the invention provides a process for the preparation of a polymer composition as hereinbefore described comprising steps (I) to (III) above.

In these processes it is preferred if the first composition in powder form is mixed with component (C) prior to extrusion in a polymer plant. Component (C) could also be added to the first composition through a side feed in an extruder however.

The compositions of the invention are primarily of use in the manufacture of injection moulded articles. Injection moulding can be carried out using well known procedures. Preferred injection moulded articles include caps, closures and transport packaging.

It will be understood that the composition of the invention may be mixed with other polymer components to form polymer blends

The compositions of the invention show much improved properties over, inter alia, bimodal Ziegler compositions and monomodal Ziegler and single site mixtures. Film needs high impact strength and moulded articles need high resistance to environmental stress cracking, at given processability (high shear viscosity) and stiffness (density). We have found that polymer compositions of (at least) two Ziegler components can have improved properties regarding this, in comparison with polymer compositions of only a single Ziegler component. These advantages are surprisingly preserved when small amounts of single site polyethylene is blended into these polymers.

This can be measured by a shear thinning index, the ratio of the viscosity at a low shear stress, divided by the viscosity a higher shear stress. The material with the higher shear thinning index can then both have the advantageous high viscosity at low shear conditions, as well as having good relatively low viscosity at the high shear rates within the extruder and within the extruder die, which gives low amperage, good output and low pressure build-up in the extruder. The same property can be seen by the Melt Flow Rate Ratio FRR5/2. Since MFR is essentially a measure of inverse viscosity at a given shear stress, FRR5/2 is essentially the ratio between the viscosities at a lower and a higher shear stress. A high value of FRR5/2 corresponds to a high value of shear sensitivity and is thus advantageous.

Typically, high values of shear thinning index (and high values of FRR5/2) correspond to broad molecular weight distribution. However, the small amount of narrow molecular weight distribution single site polyethylene added to the multimodal Ziegler component surprisingly hardly reduces the shear thinning index.

The invention will now be described further with reference to the following non-limiting examples and figures.

**Brief Description of the Figures**

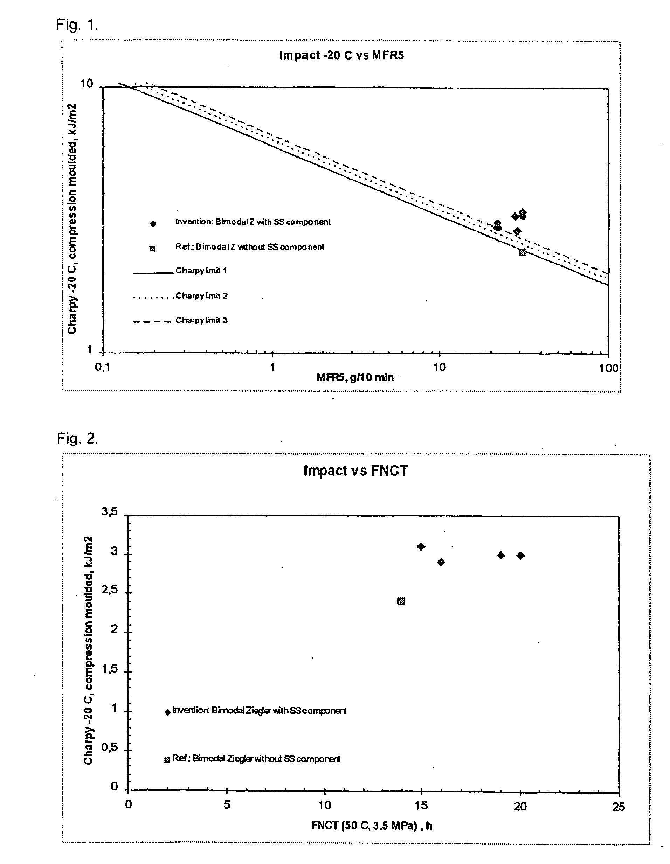

Figure 1 shows the relationship between Charpy Impact and MFR5 for a composition of the invention relative to a bimodal Ziegler-Natta polymer with no single site component.

Figure 2 shows the relationship between Charpy and FNCT and shows the high impacts, high FNCT values achieved using the compositions of the invention

Figure 3 shows the relationship between Shear Thinning index and complex viscosity for a composition of the invention relative to a monomodal Ziegler-Natta polymer.

Figure 4 shows the relationship between FRR and MFR5 for a composition of the invention relative to a monomodal Ziegler-Natta polymer.

**Analytical Tests**

Density of the materials is measured according to ISO 1183:1987 (E), method D, with isopropanol-water as gradient liquid. The cooling rate of the plaques when crystallising the samples was 15 C/min.

Real film density was measured as follows: From each film was punched pieces of 6 mm diameter. Densities of these were measured according to ISO 1183:1987 (E), method D, with isopropanol-water as gradient liquid. Positions of the pieces of film in the column was measured 24 hours after their introduction.

MFR2/5/21 are measured according to ISO 1133 at 190°C at loads of 2.16, 5 and 21.6 kg respectively.

Mw, Mn and Mw/Mn (MWD) are measured by size exclusion chromatography (SEC).

Tensile modulus is measured according to ASTM D 882-A on compression moulded plates at 1 mm/min speed.

Flexural modulus is measured on compression moulded plates according to ISO 178 at 23°C with speed 2 mm/min. The typical ratio of results between this flexural modulus and above tensile modulus is 1.08.

Charpy impact at temperatures -20 and + 23 C were measured on compression moulded (CM) plaques made according to ISO 10350-1 (1998-11-15) - option Charpy ISO 179-1 with V-notch, type A. Charpy impact on injection moulded (IM) plaques were measured similarly.

Tensile Stress and strain at yield is measured according to ISO 527-2

Tensile Strain at break and tensile strength are measured according to ISO 527-3

Tensile creep was measured according to ISO899-1:2003 Tensile Creep. Specimens according to ISO3167: 2002 - Multipurpose test specimen, type B, (compression moulded and machined).The specimens are tested in heating chamber, at 40°C. Each station has an extensiometer (type: Instron) for continuous logging and recording of the strain vs. time, started at onloading of the samples (8MPa). Initial length of measurement 50mm. Testing time was 150 h.. Reported are: Total strain in %: Deformation including onloading. Creep modulus (MPa): Stress / Total strain.

WVTR (water vapour transport rate) was measured according to ASTM F 1249 at 38°C and 90 % relative humidity.

Rheology of the polymers was determined by frequency sweep at 190 C under nitrogen atmosphere according to ISO 6721-10, using Rheometrics RDA II Dynamic Rheometer with parallel plate geometry, 25 mm diameter plate and 1.2 mm gap. The measurements gave storage modulus (G'), loss modulus (G") and complex modulus (G*) together with the complex viscosity ($\eta$*), all as a function of frequency ($\omega$) These parameters are related as follows: For any frequency $\omega$: The complex modulus: $G^* = (G'^2 + G''^2)^{1/2}$. The complex viscosity: $\eta^* = G^*/\omega$.

According to the empirical Cox-Merz rule, for a given polymer and temperature, the complex viscosity as function of frequency (given in rad/s) measured by this dynamic method is the same as the viscosity as a function of shear rate for steady state flow (e.g. a capillary).

Shear thinning, that is the decrease of viscosity with G*, becomes more pronounced when the molecular weight distribution (e.g. as measured by SEC for linear polymers) broadens. This property can be characterised by the shear thinning index, SHI, which is the ratio of the viscosity at a lower stress and the viscosity at a higher shear stress. A polymer with broad molecular weight distribution will have a higher SHI than one with a more narrow. Two polymers of equal molecular weight distribution broadness as seen by SEC, but of different molecular weights, will have about equal SHI. In the examples, shear stresses (or G*) of 5 and 50 kPa were used as basis. Thus:

$$\text{SHI\_5\_kPa/50\_Pa} = \eta^*(G^* = 5\text{kPa})/\eta^*(G^* = 50\text{ kPa})$$

FNCT has been measured according to ISO/DIS 16770.3. The test is carried out on 6 mm compression moulded notched dog bones (1mm notch depth). Dog bone size is 6mm thickness x 20 mm x 123mm. The load was 3.5 MPa and it was tested at a temperature of 50°C. Soap solution is 2 vol% ArkopalN-110

Impact resistance is determined on Dart-drop (g/50%). Dart-drop is measured using ISO 7765-1, method "A". A dart with a 38 mm diameter hemispherical head is dropped from a height of 0.66 m onto a film clamped over a hole. If the specimen fails, the weight of the dart is reduced and if it does not fail the weight is increased. At least 20 specimens are tested. The weight resulting in failure of 50% of the specimens is calculated.

Tear resistance (determined as Elmendorf tear (N))

The tear strength is measured using the ISO 6383 method. The force required to propagate tearing across a film specimen is measured using a pendulum device. The pendulum swings under gravity through an arc, tearing the specimen from pre-cut slit. The specimen is fixed on one side by the pendulum and on the other side by a stationary clamp. The tear strength is the force required to tear the specimen.

**Preparation Examples 1**

Preparation of Bimodal HDPE:

The bimodal Ziegler-Natta material was made using a process as described in EP-A-1460105. $MgCl_2$-supported Ziegler catalyst (commercially available from Engelhard under the trade name Lynx200) was fed into a continuous loop reactor, along with ethylene and hydrogen to give a polymer with $MFR_2$ of 39 and density of 970 kg/m$^3$. 40 wt% of the total polymer production was made in this reactor.

The polymer containing the catalyst was semi-continuously transferred to a fluidised gas phase reactor. Here was additionally fed hydrogen and 1-butene. The gas phase reactor temperature was 85°C. 60 w% of the total polymer production was made in this reactor. The reaction product obtained had the density of 964 kg/m$^3$. To the product was added 1000 ppm Irganox 1010 and 800 ppm zinc stearate before it was extruded

**Preparation Example 2**

Ethylene hexene resins were produced using bis(n-butylcyclopentadienyl) hafnium dichloride catalyst in a slurry loop reactor at the following conditions:

| | |
|---|---|
| Pressure | 42 bar |
| C2 amount | 4 wt% |
| C6/C2: | 0.35 |
| Temp. | 86°C |
| Residence time: | 40 to 60 mins |

The resulting polymer (Sample 4) has a MFR2 of 1.3 g/10min and a density of 922 kg/m$^3$. Other samples were produced analogously to above, but the process conditions were adapted with hydrogen feed and comonomer feed in a known manner to obtain the desired molecular weight (and thus MFR) and density as listed in table 1 below.

**Example 1**

The following metallocene produced and plastomer grades were used in the preparation of polymer blends.

Table 1

| | Density kg/m3 | $MFR_2$ g/10min | $M_w$ | Hexene (wt%) | Octene (wt%) | Comment |
|---|---|---|---|---|---|---|
| Sample 1 | 934 | 6 | 80.000 | 3.2 | | Unimodal SSC |
| Sample 2 | 934 | 1.3 | 140.000 | 2.2 | | Unimodal SSC |
| Sample 3 | 927 | 1.3 | 140.000 | 3.6 | | Unimodal SSC |
| Sample 4 | 922 | 1.3 | 130.000 | 5.1 | | Unimodal SSC |
| Exact 0203 | 902 | 3 | 85.000 | | 19.3 | Unimodal SSC |
| Exact 0210 | 902 | 10 | 65.000 | | | Unimodal SSC |
| Exact 8210 | 882 | 10 | 70.000 | | | Unimodal SSC |

The Commercial Exact products listed in table 1 are commercially available and provided by ExxonMobil.

These components were added to a bimodal HDPE (prep ex 1), having a density of 964 kg/m$^3$ and $MFR_2$=8.4 (Mw= 120.000 and MWD=16).

10 wt% of the SSC components above and 1500ppm Irganox B-561 were added to the bimodal HDPE grade. The blends were compounded on a small scale twinscrew 24 mm extruder, having a maximum set temperature of 200°C.

Table 2 shows the results from rheology, MFR, density and mechanical testing. Impact and tensile modulus are tested on injection moulded test bars, while stress crack is tested on compression moulded plaques (6 mm for FNCT). (HDPE, S1 to S4, Ex0203, Ex0210 and Ex821 0 refers to samples given in table 1.)

Table 2

| | Unit | HDPE | +S1 | +S2 | +S3 | +S4 | +Ex0203 | +Ex0210 | +Ex8210 |
|---|---|---|---|---|---|---|---|---|---|
| Density (kg/m$^3$) | (kg/m$^3$) | 962.1 | 958.6 | 958.4 | 959.0 | 957.0 | 957.3 | 956.4 | 954.1 |
| MFR$_2$ | g/10min | 9.1 | 8.5 | 6.4 | 6.4 | 6.6 | 8.0 | 9.1 | 9.0 |
| MFR5 | g/10min | 31.2 | 28.7 | 21.6 | 22.3 | 21.8 | 27.9 | 31.1 | 31.0 |
| FRR5/2 | g/10min | 3.43 | 3.38 | 3.38 | 3.48 | 3.30 | 3.49 | 3.42 | 3.44 |
| eta5 | Pays | 905 | 905 | 1,267 | 1,246 | 1,204 | 1,019 | 901 | 910 |
| eta 50 | Pa s | 255 | 314 | 431 | 411 | 404 | 314 | 278 | 278 |
| eta300 | Pa s | 214 | 243 | 284 | 276 | 274 | 239 | 225 | 225 |
| SHI(5/50) | - | 3.55 | 2.88 | 2.94 | 3.03 | 2.98 | 3.24 | 3.25 | 3.27 |
| Charpy 23°C IM | kJ/m$^2$ | 4.8 | 4.9 | 6.0 | 6.0 | 6.1 | 6.3 | 5.9 | 7.8 |
| Charpy -20°C IM | kJ/m$^2$ | 3.4 | 3.5 | 3.7 | 4.3 | 3.7 | 4.0 | 3.8 | 4.5 |
| Charpy 23°C CM | kJ/m$^2$ | 2.4 | 2.8 | 3.1 | 3 | 3.1 | 3.5 | 3.2 | 3.7 |
| Charpy -20°C CM | kJ/m$^2$ | 2.4 | 2.9 | 3 | 3 | 3.1 | 3.3 | 3.3 | 3.4 |
| Tensile modulus | MPa | 1040 | 980 | 970 | 960 | 950 | 810 | 830 | 740 |
| Stress at yield | MPa | 25.9 | 24.8 | 24.6 | 24.4 | 24.0 | 22.2 | 22.4 | 20.9 |
| Strain at yield | % | 8.8 | 8.9 | 9.2 | 9.1 | 9.2 | 10.2 | 10.0 | 10.9 |
| Creep Modulus | MPa | 90 | | | | 94 | | | |
| Creep Strain | % | 7.95 | | | | 7.40 | | | |
| FNCT (50°C, 3,5 MPa) | h | 14 | 16 | 20 | 19 | 15 | | | |
| (Charpy -20 C)/( (MFR5)^(-0.26)) | - | 5.87 | 6.94 | 6.67 | 6.72 | 6.91 | 7.84 | 8.07 | 8.30 |
| FRR5/2)/MFR5^ (-0.1) | - | 4.84 | 4.72 | 4.59 | 4.75 | 4.50 | 4.86 | 4.82 | 4.86 |
| (SHI 5 kPa/50)/( (Eta300/200)^0.5) | - | 7.67 | 5.85 | 5.52 | 5.77 | 5,69 | 6.63 | 6.84 | 6.90 |

## Example 2

The following Commercial Grades (all available from Borealis A/S, Norway) are employed

Table 3

| | FL5580 | MB6561 | FM5270 |
|---|---|---|---|
| Catalyst | Cr | ZN | metallocene |
| Modality | Unimodal | Bimodal | Unimodal |
| MFR2 (g/10min) | 1.2 | 1.5 | 1.3 |
| Density (kg/m3) | 958 | 956 | 927 |

## Film manufacture

90%wt FL5580 (Borealis) and 10%wt FM5270 (Borealis) are blended in a film extruder. A 30 micron film was extruded on a 3-layer W & H coextrusion line with 60, 50 and 50 mm extruders with L/D = 30 with die diameter 200 mm x 1.2 mm, at a blow up ratio of 3:1, The films were run with a flat 190°C profile with a minimum melting temperature of 200°C.
Further 30 micron films were prepared analogously and their properties presented in Tables 4 and 5.

Film 1:   100% FL5580
Film 2:   90% FL5580 & 10% FM5270
Film 3:   80% FL5580 & 20% FM5270
Film 4:   100% MB6561
Film 5:   90% MB6561 & 10% FM5270
Film 6:   80% MB6561 & 20% FM5270

Table 4

| Film | Unit | Film 1 | Film 2 | Film 3 |
|---|---|---|---|---|
| DART DROP, F50 | g | <70 | <70 | <70 |
| TEAR RESISTANCE, MD | N | 0.1 | 0.11 | 0.10 |
| TEAR RESISTANCE, TD | N | 5.7 | 11.7 | 11.5 |
| 1%(0.05-1.05)SECANT MODULUS, MD | MPa | 690 | | 635 |
| 1%(0.05-1.05)SECANT MODULUS, TD | MPa | 855 | | 740 |
| TENSILE STRENGTH, MD | MPa | 44 | | 59 |
| TENSILE STRENGTH, TD | MPa | 26.5 | | 21 |
| TENSILE STRAIN AT BREAK, MD | % | 520 | | 580 |
| TENSILE STRAIN AT BREAK, TD | % | 5 | | 600 |
| Water Vapour Perm | g/m2p24h | 4.6 | 4.4 | 5.7 |

Table 5

| Film | Unit | Film 4 | Film 5 | Film 6 |
|---|---|---|---|---|
| DART DROP , F50 | g | <70 | <70 | <70 |
| TEAR RESISTANCE, MD | N | 0.1* | 0.16* | 0.10 |
| TEAR RESISTANCE, TD | N | 4.9 | 3.9 | 4.2 |
| 1%(0.05-1.05)SECANT MODULUS, MD | MPa | 640 | | 525 |
| 1%(0.05-1.05)SECANT MODULUS,TD | MPa | 795 | | 690 |
| TENSILE STRENGTH, MD | MPa | 53 | | 51 |
| TENSILE STRENGTH, TD | MPa | 25 | | 36 |
| TENSILE STRAIN AT BREAK, MD | % | 630 | | 780 |
| TENSILE STRAIN AT BREAK, TD | % | 5 | >500%* | 630 |
| Water Vapour Perm | g/m2p24h | 40 | 3.4 | 4.6 |
| * measured on a 20 micron film | | | | |

## Claims

1. A process for the manufacture of a polymer film comprising:

   obtaining a polymer composition comprising at least 70% wt of a chromium HDPE and 3 to 30% wt of a unimodal mLLDPE;
   extruding and then blowing said film at a blow up ratio of 2:1 to 4:1
   so as to obtain a film having a tensile strain at break in the transverse direction of at least 550%.

**2.** A process as claimed in claim 1 wherein the polymer composition comprises 15 to 25 %wt of said mLLDPE.

**3.** A process as claimed in claim 1 or 2 having a tensile strain at break in the transverse direction of at least 600% (for a 30 micron film).

**4.** A process as claimed in any one of claims 1 to 3 wherein said film is not modified to incorporate a barrier layer.

**5.** A process as claimed in any one of claims 1 to 4 wherein the film is blown with a neck less than 2x the diameter of the extrusion die.

**6.** A process as claimed in any one of claims 1 to 4 wherein the film is blown without a neck.

**7.** A process as claimed in any one of claims 1 to 6 wherein the WVTR is less than 6 g/m$^2$ per 24 hours (for a 30 micron film).

**8.** A process as claimed in claim 1 wherein the density of mLLDPE is less than 960 kg/m$^3$, preferably less than 945 kg/m$^3$.

**9.** A process as claimed in any of the preceding claims wherein the mLLDPE is a copolymer with one or more of butene, hexene and octene.

**10.** A process as claimed in any of preceding claims wherein the density of said composition is at least 940 kg/m$^3$.

**11.** A process as claimed in claim 3 to 10 wherein the mLLDPE forms between 3 to 15% wt of the composition.

**12.** A process as claimed in any of preceding claims wherein the Mw of mLLDPE is less than 150,000.

**13.** A film obtained by a process as described in any one of claims 1 to 12.

**14.** Use of the film of claim 13 in food packaging.

**15.** A film comprising a polymer composition comprising at least 70% wt of a chromium HDPE and 3 to 30% wt of a unimodal mLLDPE and a tensile strain at break in the transverse direction of at least 550% (e.g. for a 30 micron film).

Fig. 1.

Fig. 2.

Fig 3

Shear thinning index vs complex viscosity at 300 s-1

Fig 4

FRR vs MFR

Europäisches
Patentamt

European
Patent Office

Office européen
des brevets

# EUROPEAN SEARCH REPORT

**Application Number**

EP 09 00 0974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 319 685 A (ATOFINA RES [BE]) 18 June 2003 (2003-06-18) * claims 1,7,10,11 * * page 11, paragraph 101 * * page 9 - page 10; examples B5,B7,B13-B15; table 3 * ----- | 1-15 | INV. C08J5/18 C08L23/08 B29C49/00 |
| P,X | EP 1 584 652 A (TOTAL PETROCHEMICALS RES FELUY [BE]) 12 October 2005 (2005-10-12) * claims 1,9 * * examples R1,R2,R9,R10; table 1 * * page 5 - page 6; table 2 * * paragraphs [0001], [0002], [0006], [0017], [0032], [0033], [0041] * ----- | 1-15 | |
| D,A | WO 96/18678 A (EXXON CHEMICAL PATENTS INC [US]) 20 June 1996 (1996-06-20) * the whole document * ----- | 1-15 | |

| | |
|---|---|
| | **TECHNICAL FIELDS SEARCHED (IPC)** |
| | C08J C08L B29C |

The present search report has been drawn up for all claims

| Place of search | Date of completion of the search | Examiner |
|---|---|---|
| Munich | 19 March 2009 | Lippert, Sigrid |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&.................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 00 0974

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2009

| Patent document cited in search report | | Publication date | Patent family member(s) | | Publication date |
|---|---|---|---|---|---|
| EP 1319685 | A | 18-06-2003 | AT | 353923 T | 15-03-2007 |
| | | | AU | 2002361404 A1 | 30-06-2003 |
| | | | CN | 1604920 A | 06-04-2005 |
| | | | DE | 60218224 T2 | 22-11-2007 |
| | | | WO | 03051937 A1 | 26-06-2003 |
| | | | JP | 2005511868 T | 28-04-2005 |
| | | | US | 2005119413 A1 | 02-06-2005 |
| EP 1584652 | A | 12-10-2005 | CN | 1965025 A | 16-05-2007 |
| | | | WO | 2005097888 A1 | 20-10-2005 |
| | | | JP | 2007532708 T | 15-11-2007 |
| WO 9618678 | A | 20-06-1996 | AT | 177460 T | 15-03-1999 |
| | | | CA | 2208232 A1 | 20-06-1996 |
| | | | DE | 69508278 D1 | 15-04-1999 |
| | | | DE | 69508278 T2 | 30-09-1999 |
| | | | EP | 0797622 A1 | 01-10-1997 |
| | | | US | 5635262 A | 03-06-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9618678 A
- AU 199863688
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A

- EP 537130 A
- WO 9613529 A
- WO 03051934 A
- WO 9535323 A
- WO 0155230 A
- EP 810235 A
- WO 9951646 A
- WO 03106510 A
- EP 0810235 A
- EP 0887379 A
- EP 517868 A
- EP 1460105 A

**Non-patent literature cited in the description**

- **COWELL et al.** *Plastic film & Sheeting,* April 2002, vol. 18
- **K. B. MCAULEY.** Modelling, Estimation and Control of Product Properties in a Gas Phase Polyethylene Reactor. *Thesis,* August 1991

- **K. MCAULEY ; J. MCMACGREGOR.** *AIChE Journal,* vol. 37 (6), 825-835
- **B. HAGSTRÖM.** Prediction of melt flow rate (MFR) of bimodal polyethylenes based on MFR of their components. *Conference on Polymer Processing,* 19 August 1997, vol. 4, 13